# EUROPEAN PATENT SPECIFICATION

(11) **EP 0 730 413 B1**
(45) Date of publication and mention of the grant of the patent: **21.02.2001**
(21) Application number: 94903342.7
(22) Date of filing: 29.11.1993
(51) Int. Cl.: A23K 1/00

(54) **ANTIBIOTIC BIOMASS ANIMAL FEED COMPOSITIONS**
ANTIBIOTISCHE BIOMASSE ENTHALTENDE FUTTERZUSAMMENSETZUNGEN
COMPOSITIONS D'ALIMENTATION POUR LE BETAIL A BASE DE BIOMASSE ANTIBIOTIQUE

(43) Date of publication of application: 11.09.1996
(73) Proprietor: DUCOA L.P., Highland, Illinois 62249 (US)
(72) Inventor: KING, Bruce, Dexter, Troy, IL 62294 (US)
(74) Representative: Woodcraft, David Charles
(86) International application number: US9311573
(87) International publication number: WO9514395

(56) References cited:
- EP-A- 0 079 707
- WO-A-93/00913
- WO-A-93/01720
- GB-A- 2 027 013
- US-A- 3 655 396
- US-A- 4 770 876
- US-A- 5 266 347

## Description

The invention relates to animal feed compositions containing antibiotic biomass.

### BACKGROUND OF THE INVENTION

In purified form polyene antibiotics are effective antibiotic agents for a number of uses. Natamycin, also known as pimaricin or tennectin, is an effective antifungal agent. Carter, U.S. Patents 4,536,494 and 4,600,706, discloses that dry crystalline natamycin can be mixed with feed grain to enhance growth.

U.S. Patent 4,132,777 discloses use of aqueous suspensions of natamycin on animals to control diseases such as ringworm. U.S. Patent 4,950,477 discloses aqueous aerosol suspensions of pure polyenes, including natamycin, for control of various fungal diseases in humans and animals. Canadian Patent 684,259 discloses feed additives of *Candida albicans* fermentation product, with or without the inclusion of an antifungal agent such as nystatin or natamycin. U.K. Patent Application 2,106,498 discloses the use of *Streptomyces* SF-1(ASA), NC1B 11738 to produce a new tetraene and also natamycin. U.S. Patents 4,395,491 and 4,291,053 discloses the use in fodder of salinomycin in its biomass to growth of ruminants and pigs.

### SUMMARY OF THE INVENTION

The invention is an animal feed composition comprising (a) dried antibiotic biomass containing one or more polyene antibiotics selected from the group consisting of natamycin, amphotericin A and B, virginiamycin, leucomycins, levorin, filimarsin, partricin, and cabimicina unseparated from the residual biomass solids and (b) an animal feed, wherein the amount of antibiotic present is said biomass is sufficient to prevent fungal attack during storage. A preferred antibiotic is natamycin.

### DETAILED DESCRIPTION OF THE INVENTION

It has been found that for many uses, particularly in an animal feed mixture, it is not necessary to extract and purify the antibiotic from its biomass. More specifically, it has been found that the biomass from an antibiotic fermentation broth is a superior ingredient in animal feeds, particularly grain based feeds, such as poultry feed. Not only does the antibiotic biomass contain biologically effective quantities of an antibiotic to protect against fungal mycotoxin production, but it also contains significant nutrient values such as protein, trace compounds, etc., which are desirable for maximizing animal growth.

The animal feed compositions comprise an animal feed such as a cracked grain feed for chickens, turkeys, etc., and a biologically effective amount of an antibiotic, which is included within a nonviable antibiotic biomass.

Antibiotic biomass is produced by fermentation using a microorganism that releases an antibiotic. The antibiotic biomass is rendered nonviable by any suitable technique that permits the biomass to be used as an ingredient in animal feed. The biomass comprises at least one of the following: (1) the cells of the antibiotic releasing organism, (2) antibiotic, (3) residual fermentation medium, (4) fermentation broth (e.g., an aqueous phase which typically includes by-products).

A biologically effective amount is the amount of biomass required to give adequate antifungal control and minimize mycotoxin production in the feed. Adequate control means that the animal feed is protected against mycotoxins produced by fungi, mold, yeast, etc., over the entire storage period.

Animal feed is a foodstuff that is provided to animals, such as chickens, horses, poultry, swine, turkeys, ruminants (e.g., bovine), pets, etc. The foodstuff typically comprises cereal grains (e.g., corn), soybeans, oil seeds, etc., which have been crushed or ground. The antibiotic biomass may be admixed with the foodstuff before, during and/or after being crushed or ground to obtain the animal feed.

Stored means any technique whereby the animal feed is kept in a ready-to-use form for a prolonged period of time, namely 1 to at least 2 weeks. Storage may be in elevators, bins, bags, etc. Dried means that the nonviable antibiotic biomass, either sun dried or heat dried, has had its initial moisture content of about at least 30% by weight, decreased to about 15% or lower, normally about 7%.

Antibiotics useful in the antibiotic biomass include natamycin, amphotericin A and B, virginiamycin (staphylomycin), leucomycins, levorin, filimarsin, partricin, and cabimicina (Trichomycin®). These antibiotics are disclosed in a number of references well known to those skilled in the art, such as the *Antibiotics Annual.* Amphotericin is described in Heineman, U.S. Patent 3,126,317. The antibiotic biomass may include functional equivalent derivatives of the antibiotics that are produced in the fermentation broth. Although, the fermentation process for obtaining these antibiotics are known, it was unexpected that the antibiotic biomass was a superior feed additive.

The biomass may also contain: inorganic chlorides, sulfates, phosphates and combinations thereof as salts of sodium, potassium, calcium, magnesium, etc; trace elements, such as boron, cobalt, iron, copper, zinc, manganese, chromium, molybdenum; and complex growth factors (e.g., vitamins).

The animal feed compositions are prepared by admixing, i. e., blending, etc., a biologically effective amount of dried antibiotic biomass with animal feed at a concentration of 0.5 to 100 g, typically 5 to 20 g, of antibiotic biomass per ton (907 Kg) of feed. The amount of biomass added to the animal feed depends upon the environment of the feed. If the environment is favorable for fungal growth, a relatively large dosage of the antibiotic may be required to prevent fungal mycotoxin contamination, e.g., 50-80 g of antibiotic biomass per ton (907 Kg) of feed. Favorable environments are those that are warm and moist, possess a neutral pH, contain oxygen, and include a substrate that enhances fungi growth. Since the amount of antibiotic biomass required to prevent contamination is less than the amount of antibiotic biomass required to treat existing fungal growth, the antibiotic biomass should be added to the animal feed as soon as it becomes practicable.

Additional antibiotic may be added to the biomass to increase its effectiveness. The added antibiotic may be any pharmaceutically acceptable derivative of the antibiotic (e.g., calcium and sodium salts, and esters of antibiotic). If desired, the effectiveness of the antibiotic biomass may be increased by comminuting or grinding the dried antibiotic biomass to increase the surface area of the antibiotic. The comminuted biomass is also more readily distributed throughout the animal feed in a uniform manner.

For some applications it may be desirable to first prepare a concentrated premix comprising a compatible non-toxic carrier, such as rice hulls, limestone, soybean flour, corn cob fractions, etc., with a relatively large amount of the antibiotic biomass, such as 5-20 g of antibiotic per 1-5 pounds (0.454-2.25 Kg) of the non-toxic carrier. This premix may then be blended into feed, along to achieve the desired concentration of biomass in the animal feed composition.

The antibiotic biomass is produced by any conventional fermentation process using a microorganism that produces a desirable antibiotic. During fermentation, the antibiotic producing organism culture is introduced into an aerated nutrient-rich antibiotic production medium. The organisms propagate and produce an antibiotic. Depending on fermentation conditions, antibiotic production rates normally are in the range of about 0.5 to 1.5 g/ℓ antibiotic per liter of production medium.

One specific technique for obtaining a suitable antibiotic biomass comprises preparing (e.g., sporulation) and propagating an inoculum comprising an antibiotic releasing species that, during fermentation, produces the desired antibiotic. The antibiotic releasing species is exposed to a series of predetermined environments and/or mediums which may improve the rate at which antibiotic is produced.

Any organism which comprises a natamycin producing *Streptomyces* species can be used in accordance with the invention to provide the natamycin biomass. A preferred *Streptomyces* species comprise *Streptomyces gilvosporeus* which has been deposited previously with the American Type Culture Collection (ATCC) in Rockville, Maryland, United States of America, that is registered as ATCC No. 13326.

The biomass is produced by fermentation. Antibiotic producing microorganisms are propagated and introduced into an aerated nutrient-rich fermentation medium. The pH of the fermentation broth may be controlled (e.g., via addition of an alkali base), in a manner which improves the effectiveness of the fermentation process. If desired, the fermentation process may be operated in a continuous manner. Depending on fermentation conditions, antibiotic production yields normally are in the range of about 0.5 to 1.5 g of antibiotic per liter of production medium.

One specific technique for obtaining suitable natamycin biomass comprises preparing and propagating an inoculum comprising a *Streptomyces* species that, during fermentation, produces natamycin. The *Streptomyces* species is exposed to a series of predetermined environments and/or mediums which improve the rate at which natamycin is produced.

By providing an improved environment for the *Streptomyces* species the yield of natamycin may be increased to values in the range of about 5 to 12 g/ℓ. A biomass having an increased quantity of natamycin can be obtained in a fermentation process by using the following inoculum propagation and fermentation media:
1. A suitable medium for inoculum propagation may be prepared in water (e.g., low mineral content water, distilled water, etc.), and comprises:
   a. a protein nitrogen source in an amount of from about 2-16 g/ℓ, normally about 8 g/ℓ; and
   b. a metabolizable carbon source present in an amount which is sufficient to avoid total carbon depletion, usually 5-30 g/ℓ of medium, and normally about 15 g/ℓ;
2. A suitable medium used during fermentation to induce the inoculum to produce natamycin comprises:
   a. about 80-250 g/ℓ of a metabolizable carbon source; and
   b. a protein nitrogen source containing a high level of protein and trace ingredients. The protein nitrogen source typically comprises a non-yeast protein nitrogen component and a yeast protein nitrogen component. These two protein nitrogen components are desirably present in a ratio ranging, respectively, from about 5:1 to 11:1 based on protein contents, and for best results about 8:1.

The protein nitrogen source may be supplied from a wide range of sources. For example, soy protein products (e.g., isolates, flours, meals, etc.), may comprise the non-yeast protein nitrogen source (e.g., desirable natamycin biomass yields are obtained with a soy protein source comprising 80-95% protein).

The yeast protein nitrogen may also comprise beef extract, protein hydrolysates (e.g., peptones) and/or yeast (e.g., extracts, autolysates, etc.). As discussed above, the production medium must also include a source of carbon which is metabolizable by the *Streptomyces* species. The carbon source may be supplied in any expedient form such as glucose, polysaccharide, corn and potato starches, etc.

During fermentation, natamycin may precipitate out as a free crystal, and the same may be bound to the inside and/or on the outside surface of the cells of the organism being fermented. In most fermentations, the natamycin fraction of total biomass solids will be in the range of about 5 to 35% natamycin by dry weight of the resultant natamycin biomass product.

At the end of the fermentation the biomass, together with the natamycin, may be physically removed from the fermentation broth. Any solid-liquid separation technique may be used to separate the natamycin biomass from any liquid present (e.g., filtration, centrifugation, etc.). Alternatively, the fermentation broth may be concentrated by removal of water, such as by evaporation, chemical treatment, etc. The resulting concentrate of natamycin biomass retains all of the valuable nutrients and other desirable ingredients that might normally have been lost during filtration.

Following concentration, the natamycin biomass is dried by any suitable technique such as by spray dryer, fluid bed dryer, shelf dryer, etc. The temperature used for drying ranges from about 0 to 120°C and depends on the drying technique used and the thermal stability of natamycin to a given technique.

The natamycin fermentation, natamycin biomass recovery and treatment processes generally yield a natamycin biomass which contains about 5 to 35% natamycin on a dry weight total natamycin biomass basis.

During fermentation, the antibiotic may precipitate out as a free crystal, and the same may be bound to the inside and/or on the outside surface of the cells of the organism being fermented. In most fermentations, the antibiotic fraction of total biomass solids will be in the range of about 5 to 35% antibiotic by dry weight of the resultant antibiotic biomass product.

At the end of the fermentation the biomass, together with the antibiotic, may be physically removed from the fermentation broth. Any solid-liquid separation technique may be used to separate the antibiotic biomass from any liquid present (e.g., filtration, centrifugation, etc.). Alternatively, the fermentation broth may be concentrated by removal of water, such as by evaporation, chemical treatment, etc. The resulting concentrate of antibiotic biomass retains all of the valuable nutrients and other desirable ingredients that might normally have been lost during filtration.

Following concentration, the antibiotic biomass is dried by any suitable technique such as by spray dryer, fluid bed dryer, shelf dryer, etc. The temperature used for drying ranges from about 0 to 60°C and depends on the drying technique used and the thermal stability of the antibiotic to a given technique.

The antibiotic fermentation, antibiotic biomass recovery and treatment processes generally yield antibiotic biomass containing about 25 to 35% antibiotic on a dry weight total antibiotic biomass basis.

For example, the solids from a fermentation broth containing the antibiotic may be separated, for example, by centrifuging. The supernate may be discarded and the biomass divided into particles. Biomass may be dried in a fluid bed dryer at 70 C until a moisture content of about 7-8% by weight is obtained. The dried antibiotic biomasses may be mixed with a chicken feed comprising corn, wheat and soybean meal at a rate of about 100 g of biomass per ton (907 Kg) of chicken feed. Alternatively, a feed premix may be prepared by mixing about 100 g of the antibiotic biomasses with about 1-5 pounds (0.454-2.25 Kg) of rice hulls and/or soybean flour. The premixes may be admixed with a chicken feed comprising corn, wheat and soybean meal to obtain an enhanced feed including about 10 to 15 g of antibiotic per ton (907 Kg) of feed. The resultant feed is (1) protected from fungi contamination, (2) permits enhanced chicken growth rates and (3) controls and prevents diseases in the chicken associated with a fungi infection or mycotoxin production.

The antibiotic biomass is compatible with other additives which may be admixed with the animal feed. Suitable additives include: protein, fat, fiber, calcium (e.g., calcium carbonate), phosphorus, trace metals, vitamins, citrus pulp, grape hulls, rice hulls, etc. An energy source such as sugar (e.g., lactose) may already be present and/or admixed with the added antibiotic biomass. In addition to the energy source, other materials may be used in conjunction with the antibiotic biomass. Fish meal, certain vitamins, etc., may be added to reduce the growth rate of the fungi. However these materials alone are not sufficient to protect animal feed from fungi contamination.

Depending upon the storage conditions, the antibiotic can be expected to be effective against fungal contamination of the animal feed for several weeks or months. However, to ensure maximum effectiveness, the feed composition should be shielded from extended exposure to light, e.g., stored in the dark within a dry container.

Any antibiotic in the feed composition consumed by the animal is normally not absorbed or retained within the animal. As a result, the antibiotic is generally not incorporated into the eggs and/or flesh of the animal and does not affect human consumption of any animal which has consumed the feed composition. However, animals which are exposed to the fungi may incorporate the fungi, and in some cases toxins thereof, into their eggs and flesh. These fungi may be harmful to humans which consume the eggs and/or flesh of contaminated animals and, accordingly, it is desirable to prevent any significant exposure of such animals to fungi.

It may be advantageous to introduce the antibiotic biomass in the animal feed in conjunction with other treatment processes and/or substances. More importantly, the antibiotic biomass does not preclude using the animal feed in conjunction with any medication, end use product or event (e.g., the antibiotic biomass may be fed to an animal undergoing a certain medical treatment).

### INDUSTRIAL APPLICABILITY

The invention provides an enhanced animal feed by adding an antibiotic biomass to the feed. The antibiotic biomass enhances the quality and nutritional integrity of the feed by reducing, if not eliminating, contamination of the feed associated with fungal growth and possible mycotoxin release.

Although the antibiotic within the antibiotic biomass may have some beneficial effect on the animal, the purpose of the present invention is to protect the feed itself from fungal contamination. However, an animal feed containing the antibiotic which is substantially free from fungal contamination, will enhance the animal growth rate in a cost effective manner. The antibiotic biomass (1) enhances the quality of the feed which enhances the health and, thus, growth rate of the animal consuming the feed and (2) permits cost-effective storage of animal feed for a longer period of time without spoilage or waste due to fungal contamination.

### EXAMPLE 1

This example illustrates the preparation of an antibiotic biomass and its addition to animal feed to produce an antibiotic containing animal feed composition.

Agar slants were prepared using distilled water to which has been added the following:
3 g/ℓ yeast extract (Difco "Bacto" Yeast Extract)
3 g/ℓ malt extract (Difco Malt Extract)
5 g/ℓ peptone (Difco "Bacto" peptone)
10g/ℓ glucose
15 g/ℓ agar.
The agar was sterilized at about 121 C for about 15 min.

An inoculum medium of the following composition was prepared in distilled water. The pH was adjusted to about 7.0 with potassium hydroxide.
20 g/ℓ glucose
10 g/ℓ sodium chloride
6 g/ℓ corn steep liquor (PPM (brand), Corn Steep Liquid)
6 g/ℓ peptone (Difco "Bacto" peptone)
The inoculum medium was sterilized at about 121°C for about 15 min.

*Streptomyces gilvosporeus,* American Type Culture Collection Registration No. 13326, was obtained from the American Type Culture Collection as a freeze-dried spore suspension and used as the culture source. The culture was held on the agar slants at about 25°C until the culture sporulated.

The agar slants sporulated heavily within about 10 days and were used after 10-20 days. Spores were scraped off these agar slants into the inoculum medium to achieve a spore suspension concentration of about 10⁸ CFU/mℓ. About 2 mℓ of the spore suspension was added to about 100 mL of the inoculum medium in a 500 mL baffled flask. The inoculum in the baffled flask was incubated for about 48 hrs. at about 29°C and agitated at about 200 rpm on a rotary shaker. After about 48 hrs., about 4 mℓ of this culture was added to about 200 mℓ of inoculum medium in a 1 ℓ baffled flask, to propagate the inoculum. This inoculum was then incubated for about an additional 24 hrs. at about 29°C and agitated at about 200 rpm on a rotary shaker. The inoculum thus produced was used to inoculate 8 ℓ of production medium.

The natamycin production medium was of the following initial composition:
19.5 g/ℓ soy protein isolate (ADM, "Profam" S970)
4.5 g/ℓ yeast extract (Stauffer, Type KAT)
0.2 mℓ defoamer (Mazu, DF 289)
The production medium was prepared in distilled water in a 14 L fermenter and the pH was adjusted to about 7.6 with potassium hydroxide. The fermenter was sterilized for about 15 min at about 121°C. Glucose was sterilized separately as a 50% solution in distilled water.

Before inoculation, the production medium was heated to about 29°C and the glucose was added to achieve an initial concentration of glucose of about 40 g/ℓ. An aeration rate of about 0.3 v/v-min. (volumes of air per volume of medium per min) and an agitation rate of about 300 rpm was established for the fermenter.

The inoculum containing *Streptomyces gilvosporeus,* (ATCC Registration No. 13326), was added to the fermentation vessel until the fermentation vessel had an inoculum content of about 2% by volume. Glucose was added to the inoculum after about 40 hr of fermentation in order to maintain a glucose concentration of about 20 g/ℓ glucose in the fermentation vessel. This was done by feeding glucose to the fermenting vessel at a rate of about 1 g/ℓ-hr. The agitation rate of the fermentation vessel was increased as necessary to maintain a dissolved oxygen level of about 50% of air saturation.

Solids within the biomass formed may be separated from the fermentation broth by centrifugation. The supernate from the centrifugation may be discarded and the pellets broken up and dried in a fluid bed dryer (e.g., dried at about 70 C to obtain a 7-8% moisture content). Alternatively, solids may be separated from the fermentation broth by filtration on a Buchner funnel using Whatman No. 3 filter paper. The filter cake from the filtration process may be dried (e.g., dried to about 30% moisture in a convection oven at about 70°C and then drying to about 6% moisture in a fluid bed dryer). Typically, a total of about 1-13 g of biomass is recovered of which about 8-16% is natamycin. Normally, the antibiotic biomass is mixed with conventional fresh cracked corn/wheat/soybean meal (e.g., conventional chicken or turkey feed mix), at a rate of about 100-800 g of product per ton (907 Kg) of feed mix..

### EXAMPLE 2

This example illustrates inhibition of mold growth in an animal feed composition that contains an antibiotic biomass.

Commercial crumbled broiler starter chicken feed was ground in a laboratory grinder to a uniform particle size of approximately 0.5 mm. Sterile distilled water added to increase the moisture content of the feed to 15.5% The feed was divided into two portions. The control feed was left untreated. Antibiotic biomass containing natamycin, similar to that prepared in Example 1, was added to the other portion and thoroughly mixed to produce an animal feed composition that contained 11 ppm of natamycin.

Five 25 g samples of each portion were added to 250 mℓ wide-mouth Erlenmeyer flasks. Each flask was stoppered with a two-hole rubber stopped. Cumulative oxygen consumption was measured using a Micro-Oxymax respirometer (Columbus Instruments, Columbus, Ohio).

| CUMULATIVE OXYGEN CONSUMPTION (micro-ℓ) | | |
|---|---|---|
| Day of Incubation | No Biomass | Biomass Added |
| Day 1 | 10 | 20 |
| Day 2 | 138 | 132 |
| Day 3 | 278 | 269 |
| Day 4 | 429 | 391 |
| Day 5 | 6,722 | 2,542 |
| Day 6 | 37,493 | 14,888 |

Having described the invention, we now claim the following and their equivalents.

## Claims

1. Use of a dried polyene antibiotic biomass in the manufacture of an animal feed composition, wherein the biomass comprises 5 to 35% of the antibiotic based on the dry weight of the antibiotic biomass and wherein the polyene antibiotic is selected from the group consisting of natamycin, amphotericin A & B, leucomycins, filimarsin, partricin and cabimicina.

2. An animal feed composition or premix which is a mixture of a dried antibiotic biomass with animal feed at a concentration of 0.5g to 100g per 907kg (1 ton) of animal feed, wherein the polyene antibiotic is selected from the group consisting of natamycin, amphotericin A & B, leucomycins, filimarsin, partricin and cabimicina.

3. A composition as claimed in claim 2 wherein the antibiotic biomass comprises 5-35% of the polyene antibiotic, based on the dry weight of the antibiotic biomass.

4. A premix as claimed in claim 2 or 3 which contains 5 to 20g of antibiotic biomass per 0.454∼2.25kg (1∼5 pounds) of a non-toxic carrier.

5. A composition as claimed in claim 2 or 3 which contains 50 to 80g of the antibiotic biomass per 907 kg (1 ton) of the animal feed.

6. An animal feed composition or premix as claimed in any one of claims 2 to 5 wherein the animal feed is grain based poultry feed.

7. A process for preparing animal feed, the process comprising:
(a) preparing and propagating an inoculum comprising a *Streptomyces* species that produces natamycin during fermentation;
(b) adding the inoculum to a fermentation medium and fermenting to produce a fermentation broth comprising biomass solids and natamycin:
(c) separating the biomass solids together with natamycin from the fermentation broth to produce natamycin biomass;
(d) drying the biomass to produce dried natamycin biomass; and
(e) admixing the dried natamycin biomass with animal feed.

8. A process according to claim 7 wherein the natamycin biomass comprises 5-35% natamycin, based on the dry weight of the natamycin biomass.

9. A process according to claim 7 or 8 wherein the feed is chicken feed and the feed comprises 10 to 15g of natamycin per 907kg (1 ton) of chicken feed.

## Patentansprüche

1. Verwendung einer antibiotischen Biomasse aus getrocknetem Polyen in der Herstellung einer Tierfutterzusammensetzung, worin die Biomasse 5 bis 35% des Antibiotikums auf Basis des Trockengewichts der antibiotischen Biomasse umfasst und worin das Polyen-Antibiotikum ausgewählt ist aus der Gruppe bestehend aus Natamycin, Amphotericin A & B, Leukomycinen, Filimarsin, Partricin und Cabimicin.

2. Tierfutterzusammensetzung oder Vormischung, die eine Mischung einer getrockneten antibiotischen Biomasse mit Tierfutter in einer Konzentration von 0,5 g bis 100 g pro 907 kg (1 Tonne) Tierfutter ist, worin das Polyen-Antibiotikum ausgewählt ist aus der Gruppe bestehend aus Natamycin, Amphotericin A & B, Leukomycinen, Filimarsin, Partricin und Cabimicin.

3. Zusammensetzung gemäß Anspruch 2, worin die antibiotische Biomasse 5 - 35% des Polyen-Antibiotikums auf Basis des Trockengewichts der antibiotischen Biomasse umfasst.

4. Vormischung gemäß Anspruch 2 oder 3, die 5 bis 20 g antibiotischer Biomasse pro 0,454 ~ 2,25 kg (1 ~ 5 Pfund) eines nichttoxischen Trägermaterials enthält.

5. Vormischungszusammensetzung gemäß Anspruch 2 oder 3, die 50 g bis 80 g der antibiotischen Biomasse pro 907 Kg (1 Tonne) des Tierfutters enthält.

6. Tierfutterzusammensetzung oder Vormischung gemäß einem der Ansprüche 2 bis 5, worin das Tierfutter ein Geflügelfutter auf Körnerbasis ist.

7. Verfahren zur Zubereitung von Tierfutter, umfassend:
(a) Zubereitung und Vermehrung eines Impfgutes, umfassend eine Streptomyces-Spezies, die bei der Fermentierung Natamycin produziert;
(b) Hinzufügen des Impfgutes zu einem Fermentierungsmedium und Fermentierung zur Herstellung einer Fermentationsbrühe, umfassend Biomassefeststoffe und Natamycin;
(c) Trennung der Biomassefeststoffe gemeinsam mit Natamycin von der Fermentationsbrühe zur Herstellung von Natamycin-Biomasse;
(d) Trocknen der Biomasse zur Herstellung getrockneter Natamycin-Biomasse; und
(e) Mischen der getrockneten Natamycin-Biomasse mit Tierfutter.

8. Verfahren gemäß Anspruch 7, worin die Natamycin-Biomasse 5 - 35% Natamycin umfasst, basierend auf dem Trockengewicht der Natamycin-Biomasse.

9. Verfahren gemäß Anspruch 7 oder 8, worin das Futter Hühnerfutter ist und das Futter 10 bis 15 g Natamycin pro 907 kg (1 Tonne) Hühnerfutter enthält.

## Revendications

1. Utilisation d'une biomasse séchée d'antibiotique du type polyène dans la fabrication d'une composition d'aliment pour animaux, dans laquelle la biomasse comprend 5 à 35 % de l'antibiotique, par rapport au poids sec de la biomasse d'antibiotique, et dans laquelle l'antibiotique du type polyène est choisi dans la classe formée par la natamycine, l'amphotéricine A & B, les leucomycines, la filimarsine, la partricine et le cabimicina.

2. Une composition ou un prémélange d'aliment pour animaux qui est un mélange d'une biomasse séchée d'antibiotique avec un aliment pour animaux à une concentration de 0,5 g à 100 g pour 907 kg d'aliment pour animaux, dans lequel l'antibiotique du type polyène est choisi dans la classe formée par la natamycine, l'amphotéricine A & B, les leucomycines, la filimarsine, la partricine et le cabimicina.

3. Une composition telle que revendiquée dans la revendication 2, dans laquelle la biomasse d'antibiotique comprend 5 à 35 % de l'antibiotique du type polyène par rapport au poids sec de la biomasse d'antibiotique.

4. Un prémélange tel que revendiqué dans la revendication 2 ou 3, qui contient 5 à 20 g de biomasse d'antibiotique pour 0,454 à 2,25 kg d'un support non toxique.

5. Une composition telle que revendiquée dans la revendication 2 ou 3, qui contient 50 à 80 g de la biomasse d'antibiotique pour 907 kg de l'aliment pour animaux.

6. Une composition ou un prémélange d'aliment pour animaux tel que revendiqué dans l'une quelconque des revendications 2 à 5, dans lequel l'aliment pour animaux est un aliment pour volaille à base de céréales.

7. Un procédé pour préparer un aliment pour animaux, le procédé consistant à :
(a) préparer et propager un inoculum comprenant une espèce de *Streptomyces* qui produit de la natamycine pendant la fermentation ;
(b) ajouter l'inoculum à un milieu de fermentation et faire fermenter pour produire un bouillon de fermentation comprenant des solides de biomasse et de la natamycine ;
(c) séparer les solides de biomasse ainsi que la natamycine du bouillon de fermentation pour produire une biomasse de natamycine ;
(d) sécher la biomasse pour produire une biomasse séchée de natamycine ; et
(e) ajouter et mélanger la biomasse séchée de natamycine à l'aliment pour animaux.

8. Un procédé selon la revendication 7, dans lequel la biomasse de natamycine comprend 5 à 35 % de natamycine par rapport au poids sec de la biomasse de natamycine.

9. Un procédé selon la revendication 7 ou 8, dans lequel l'aliment est un aliment pour poulets et l'aliment comprend 10 à 15 g de natamycine pour 907 kg d'aliment pour poulets.
